# EUROPEAN PATENT SPECIFICATION

(11) **EP 3 831 523 B1**
(45) Date of publication and mention of the grant of the patent: **22.04.2026**
(21) Application number: 20211244.7
(22) Date of filing: 02.12.2020
(51) Int. Cl.: B23D 49/00, B23D 51/00

(54) **RECIPROCATING SAW WITH CLAMPING DEVICE**
SÄBELSÄGE MIT KLEMMVORRICHTUNG
SCIE RECIPROQUE AVEC DISPOSITIF DE SERRAGE

(30) Priority: 02.12.2019 CN 201922125642 U
(43) Date of publication of application: 09.06.2021
(73) Proprietor: Techtronic Cordless GP, Anderson, SC 29621 (US)
(72) Inventor: WEI, An Wei, Dongguan City, Guangdong (CN); ZHENG, Li Da, Dongguan City, Guangdong (CN); FAN, Frankie Lam Kwok, Kawi Chung, Hong Kong SAR (China) (CN)
(74) Representative: Zimmermann & Partner Patentanwälte mbB

(56) References cited:
- EP-A1- 2 673 101
- EP-B1- 2 673 101
- CN-B- 106 541 179
- CN-U- 205 519 919
- US-A- 3 805 383
- US-A- 6 067 716

## Description

### Technical field

The present invention relates to a reciprocating saw clamping device and a reciprocating saw having the clamping device, and in particular relates to a clamping device for securing an object to be cut such as a branch, and a reciprocating saw having the clamping device.

### Background art

An electric reciprocating saw is an electric tool that is commonly used for cutting objects; due to its ability to perform cutting operations conveniently and quickly, it is used very widely in places such as homes and gardens. Electric reciprocating saws are mainly used for cutting objects such as wood, branches and pipes, but these objects are mostly round or tubular in shape, and easily roll or slip during cutting, thus making cutting difficult. To solve this problem, a common solution in the prior art is to mount a clamping component on the electric reciprocating saw, the clamping component being used to fix the object to be cut; the clamping component is generally mounted close to a saw blade of the electric reciprocating saw. When the object is being sawed, the clamping component can be set up on the object to be cut, such that the object is positioned in a clamping mouth part of the clamping component. This is equivalent to fixing the object to be cut below the saw blade of the reciprocating saw by means of the clamping component, and can make sawing work safer and easier. The CN 205 519 919 U discloses a clamping structure for a reciprocating saw, comprising: a blade guard mounted on the housing, with an opening formed at the center of its front face for inserting the saw blade; a front claw, the upper center of which extends rearwardly with a connecting rod positioned above the blade guard and hinged via a connecting pin and torsion spring to a front claw bracket located behind the front face of the blade guard; A front claw bracket, the rear end of which is snap-fit positioned onto the housing via a latch. A limiting protrusion is provided at the upper front end of the front claw bracket to restrict the maximum rotation angle of the front claw. The front claw bracket, torsion spring, and front claw are connected as an integrated unit via connecting pins and shaft retaining rings.

However, the clamping mouth part of the abovementioned clamping component in the prior art has a fixed size, and as a result, clampable objects need to be within a certain size range; objects that are slightly too small or slightly too large in size cannot be clamped effectively. Moreover, a clamping component with such a structure is generally formed of components such as a blade guard, a front claw support and a front claw; the overall structure is complex, and the profile is large, with the result that the reciprocating saw is rather clumsy during cutting operations, and difficult to operate. This places a considerable burden on the operator in terms of carrying and performing jobs.

### Summary of the invention

To solve the abovementioned problems, the present invention provides a reciprocating saw according to claim 1, wherein a clamping device being mounted on a machine body of the reciprocating saw, close to a cutting saw blade located at a front end of the machine body of the reciprocating saw, and being configured to clamp an object to be cut when the reciprocating saw is performing a cutting operation, wherein the clamping device comprises a clamp and a clamp support, the clamp and clamp support being rotatably hinge-connected, and the clamping device is removably mounted on the machine body of the reciprocating saw by means of positioning structures which fit each other and are arranged on the clamp support and a housing of the reciprocating saw.

Preferably, an elastic member is also mounted between the clamp and clamp support, and the clamp can be rotated back to an initial position relative to the clamp support by means of the elastic member; in a state of having returned to the initial position, the clamping device lies against a front end part of the machine body of the reciprocating saw.

Preferably, the positioning structures comprise a first guide structure formed on the clamp support, and a second guide structure fitting the first guide structure and arranged on the housing; the positioning structures further comprise a first snap-fit structure formed on the clamp support, and a second snap-fit structure that can engage with the first snap-fit structure and is arranged on the housing.

Preferably, the first guide structure is a guide rib formed on an inside wall of the clamp support, and the second guide structure is a guide groove provided on a front-end side wall of the housing; the first snap-fit structure is a support part formed on an inner wall of the clamp support, and the second snap-fit structure is a snap-fit part mounted on the housing.

Preferably, the first guide structure is a pair of guide rods on the clamp support, and the second guide structure is a guide post arranged in an internal space at a front end of the housing; the first snap-fit structure is an engagement slot provided at an end part of the guide rod, and the second snap-fit structure is a positioning pin assembly arranged in the internal space.

Preferably, the snap-fit part is rotatably mounted on an inner wall of the housing, an elastic member is also mounted therebetween, and the snap-fit part can be rotated back to an initial position relative to the housing by means of the elastic member; the snap-fit part is operated by means of a button part mounted on the housing; when the button part is pressed, the snap-fit part will release the support part, and when the button part is released, the snap-fit part will rotate under the action of the elastic member to a position where the support part can be hooked.

Preferably, the button part comprises two buttons in an insertion fit with each other, the buttons being located at two sides of the snap-fit part respectively, and the buttons are pressed towards each other to operate the snap-fit part; an elastic member is also provided between the buttons, and the buttons can be returned by means of the elastic member to a position where the snap-fit part encounters no interference.

Preferably, a hook part is provided on the snap-fit part, and the snap-fit part hooks the support part by means of the hook part; when the buttons are pressed towards each other, the buttons approach each other and press the snap-fit part so that the hook part releases the support part.

Preferably, the elastic member is a torsion spring.

Preferably, the clamp and the clamp support are hinge-connected by means of a connecting pin; the torsion spring is fitted round the connecting pin, and has one end engaged with the clamp in an upward direction, and another end in abutment with the clamp support; an elastic shaft retaining ring is also mounted at an end part of the connecting pin.

Preferably, an inclined face sloping towards a rear end of the clamp support is also formed on the clamp support, and correspondingly, a limiting part is formed at an upper end part of the clamp in such a way as to be bent away from the clamp support; limiting is performed by abutment of the limiting part and the inclined face with each other.

Preferably, the positioning pin assembly comprises a positioning pin moveably mounted in the internal space; a positioning part is provided on a pin body of the positioning pin, and the engagement slot can be fastened by means of the positioning part; an elastic member for returning the positioning pin to an initial position is also fitted round the pin body of the positioning pin.

Preferably, the guide post is arranged on a side wall of the internal space, and crosses the internal space.

Preferably, the guide post is cylindrical; the pair of guide rods are arranged opposite each other in a vertical direction, and a gap therebetween is slightly larger than the diameter of the guide post.

Preferably, the guide rod may be made of a metal material or a plastic material; when a plastic material is used, the thickness of the guide rod is at least 3 mm.

Preferably, the clamp has a clamping claw and a clamp jaw that is formed at a lower end part of the clamping claw in such a way as to be bent away from the housing; when the clamping device lies against the housing, the clamp jaw is close to a receiving region for the object to be cut that is located at the front end part.

Preferably, a sawtooth-like structure is provided on a face of the clamping claw at a side facing the housing.

The present invention also provides a reciprocating saw, comprising a handle, a cutting saw blade remote from the handle, and a reciprocating saw machine body located between the handle and the cutting saw blade, and further comprising the clamping device as described above.

Preferably, the reciprocating saw has a fastening ring for fastening the cutting saw blade, with a protrusion structure being provided in an axial direction on the periphery of the fastening ring; a tooth-like protrusion is also provided on the protrusion structure at a side where a force is exerted.

Preferably, two said protrusion structures are provided, the two protrusion structures being arranged opposite each other in a circumferential direction at the periphery of the fastening ring.

Having adopted the solution described above, the present invention has the following beneficial effects:
The reciprocating saw clamping device in the present invention comprises a clamp and a clamp support that are structurally simple and compact; the clamp and clamp support are hinge-connected together, and can be removed from and mounted on the reciprocating saw machine body as a unit. This also makes it easier to choose whether to mount or remove the clamping device according to actual needs during use. The clamping device and reciprocating saw in the present invention are fixed to each other by means of snap-fit structures arranged on the clamp support and the housing; such a fixing structure is not only structurally simple, but also stable and reliable, and the corresponding mounting and removal operations are very simple.

When the clamping device of the present invention is clamping an object to be cut, it is only necessary to put the object to be cut into the receiving region of the clamping device and lightly pull the reciprocating saw away from the object to be cut. The object to be cut slides naturally between the clamping claw of the clamp and a machine frame, and is close to the cutting saw blade; there is no need to manually pull the clamping claw. During cutting, the object to be cut is also clamped reliably at all times under the biasing action of the torsion spring on the clamping device, making operations safer and more reliable. The clamp in the present invention can automatically adjust a clamping angle according to the size of the object to be cut, and at the same time has an angle limiting structure, so can satisfy cutting requirements of different sizes, with a larger range of operations. Furthermore, since the clamping device in the present invention has a small structure overall, the machining process is simple and costs are low.

### Brief description of the drawings

Fig. 1 is a schematic drawing of the internal structure of the reciprocating saw to which the present invention relates.
Fig. 2 is a schematic drawing of the clamping device to which embodiment 1 of the present invention relates, in a state of having been removed from the reciprocating saw.
Fig. 3 is an exploded drawing of the clamping device to which embodiment 1 of the present invention relates.
Fig. 4 is a schematic drawing of the internal structure of the clamp support in fig. 3.
Fig. 5 is a schematic drawing of the structure of the snap-fit assembly in fig. 3.
Fig. 6 is an exploded drawing of part of the snap-fit assembly in fig. 5.
Fig. 7 is a schematic drawing of the clamping device to which embodiment 1 of the present invention relates, clamping an object to be cut.
Fig. 8 is a schematic drawing of the clamping device to which embodiment 2 of the present invention relates, in a state of having been removed from the reciprocating saw.
Fig. 9 is a structural drawing of the clamping device to which embodiment 2 of the present invention relates.
Fig. 10 is a schematic drawing of the mounting structure of the clamping device to which embodiment 2 of the present invention relates.

**Reference labels:**

| | | | |
|---|---|---|---|
| 1, 1' | clamping device; | 11, 11' | clamp; |
| 11a | clamping claw; | 11b | clamp jaw; |
| 111, 111' | connecting plate; | 112 | pin hole; |
| 113, 113' | limiting part; | 12, 12' | clamp support; |
| 121, 121' | connecting part; | 122 | pin hole; |
| 123 | inclined face; | 124 | guide rib; |
| 125 | support part; | 126 | slot part; |
| 127 | guide rod; | 127a | engagement slot; |
| 13, 13' | connecting pin; | 131 | annular groove; |
| 14 | torsion spring; | 15 | elastic shaft retaining ring; |
| 16 | snap-fit assembly; | 161 | button part; |
| 161a, 161b | button; | 161c | compression spring; |
| 161a-1, 161b-1 | guide part; | 161a-2 | guide rib; |
| 161b-2 | engagement slot; | 161a-3, 161b-3 | pressing part; |
| 162 | snap-fit part; | 162a | hook part; |
| 162b | connecting pin; | 162c | gap; |
| 162d | oblique face; | 162e | torsion spring; |
| 2, 2' | housing; | 21, 21' | front end part; |
| 21a' | recess; | 22 | receiving part; |
| 23 | receiving region; | 24 | guide groove; |
| 25 | internal space; | 251 | insertion port; |
| 26 | guide post; | 27 | positioning pin; |
| 271 | positioning part; | 272 | compression spring; |
| 3 | motor; | 4 | speed reducing gear assembly; |
| 5 | cylindrical cam assembly; | 6 | cutting saw blade; |
| 61 | fastening ring; | 611 | protrusion structure; |
| 7 | battery assembly; | 8 | handle; |
| 9 | object to be cut. | | |

### Detailed description of the invention

Disclosed in the present invention are a reciprocating saw clamping device, and a reciprocating saw having the clamping device. The clamping device 1 is removably mounted on a reciprocating saw machine body, close to a cutting saw blade, and used for clamping an object to be cut in a cutting operation, so that the cutting operation proceeds safely and reliably. The object to be cut is for example wood, plastic, metal, concrete or a mixture thereof; or made of a material selected from wood, plastic, metal and mixtures thereof.

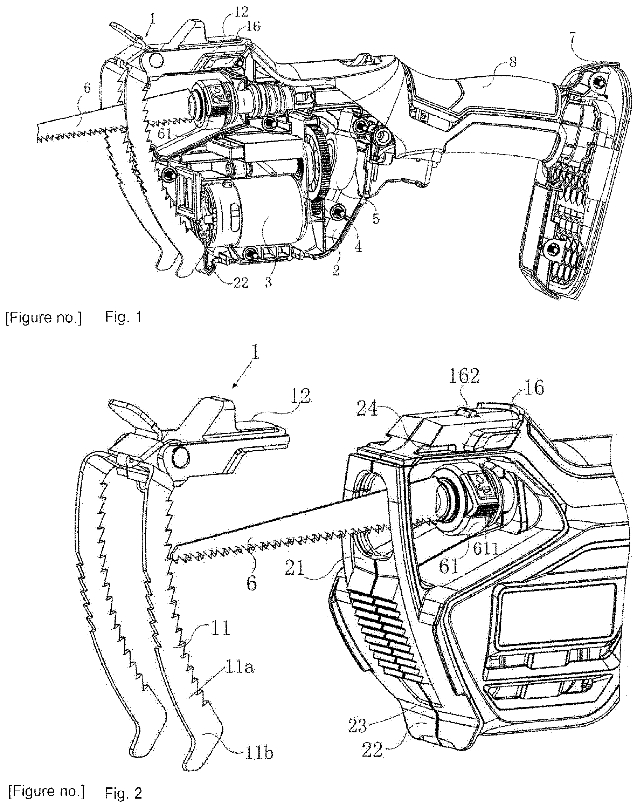

Fig. 1 is a structural schematic drawing of the reciprocating saw in the present invention; a housing 2 has been removed at one side in fig. 1, to better display the internal structure of the reciprocating saw. As shown in fig. 1, the interior of the reciprocating saw comprises a motor 3; an output shaft of the motor 3 is connected to a speed reducing gear assembly 4; an output end of the gear assembly 4 is connected to a cylindrical cam assembly 5; a mounting shaft of a cutting saw blade 6 is driven to reciprocate by means of the cylindrical cam assembly 5, thus driving the cutting saw blade 6 to perform a reciprocating cutting operation, wherein the cutting saw blade is fixed to the mounting shaft and located at a front end of the machine body. The reciprocating saw further comprises a battery assembly 7 (only a mounting region is shown in fig. 1); the battery assembly 7 is removably mounted on the reciprocating saw machine body, close to a handle 8, and is located at an extremity of the machine body; the battery assembly 7 is electrically connected to the motor 3, and thereby supplies power to the motor 3.

### <Embodiment 1>

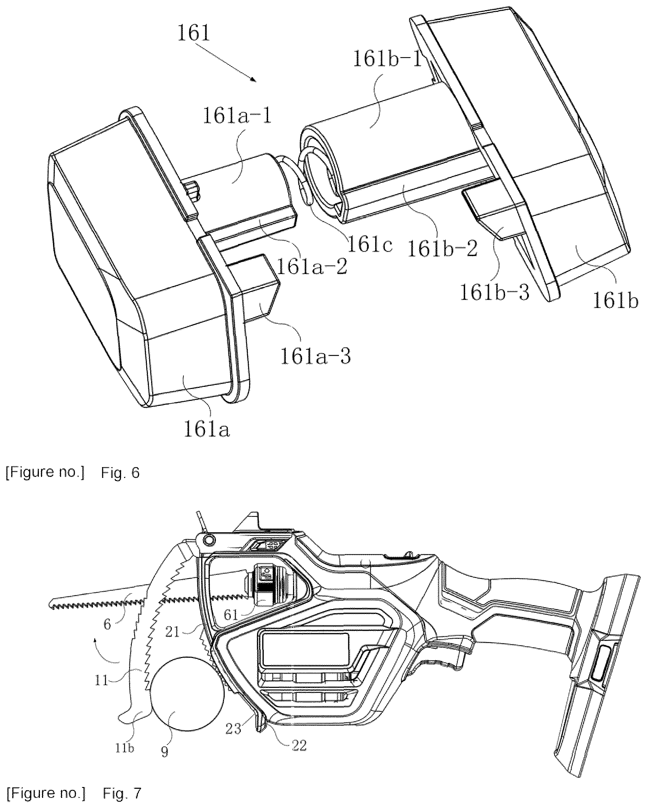

The clamping device 1 in this embodiment is removably connected to the machine body of the reciprocating saw; fig. 1 shows a schematic drawing of the clamping device 1 when mounted on the reciprocating saw machine body, and fig. 2 shows a schematic drawing of the clamping device 1 removed from the reciprocating saw machine body. The clamping device 1 can be selectively mounted on the reciprocating saw machine body or removed from the reciprocating saw machine body according to the circumstances of actual use. As shown in fig. 2, the clamping device 1 is mounted at a front side of the reciprocating saw, close to the cutting saw blade 6, and has a clamp 11 and a clamp support 12 hinge-connected to the clamp, wherein the clamp 11 has multiple clamping claws, preferably two clamping claws. Each clamping claw generally has a concave face or a partially concave face at a side facing the housing 2, and correspondingly, a front end part 21 of the machine body (the housing 2) opposite the clamping device 1 has a forward-protruding structure matching the concave face, such that an object to be cut 9 is clamped through the cooperation of the clamp 11 and the front end part 21 (see fig. 7). A sawtooth-like structure is also provided on the concave face side of the clamping claw 11a of the clamp 11; the sawtooth-like structure is provided over the entire concave face of the clamping claw 11a. Sawteeth may also be provided on only a part of a partial concave face as required; for example, the sawtooth-like structure is provided only in a middle part. Furthermore, a sawtooth-like structure may also be provided on the housing front end part 21 opposite the clamping claw 11a, preferably on a part of the front end part 21 that is opposite a gap between the two clamping claws 11a. In this embodiment, the sawtooth-like structure reduces the possibility that the object to be cut 9 will slip and/or rotate during placement and cutting, and it is thereby possible to better seize and hold the object to be cut 9. Of course, in cases where it is necessary to prevent indentations from being produced in an outer surface of the object to be cut, the choice can also be made as required to replace the abovementioned sawtooth-like structure with a coarse-grained structure or another structure capable of producing high frictional resistance.

As shown in fig. 2, a clamp jaw 11b is formed at an end part of the clamping claw 11a; the clamp jaw 11b is formed by bending away from the front end part 21 that end part of the clamping claw 11a which is remote from the side where the clamp support 12 is hinge-connected. When the object to be cut 9 is clamped, the clamp jaw 11b can abut the object to be cut 9 and push it towards a region between the clamping claw 11a and the front end part 21. A receiving part 22 is also formed at a lower end of the front end part 21; the receiving part 22 is formed by the lower end of the front end part 21 of the housing 2 being bent towards the clamping device 1. A receiving region 23 is formed between the receiving part 22 and the front end part 21; when the clamp 11 is in a closed position shown in fig. 1, the clamp jaw 11b is close to the receiving part 22 and the receiving region 23. In addition, the receiving region 23 has an obtuse-angle shape, and can receive the object to be cut 9 that is about to be cut by the cutting saw blade 6; such an obtuse-angle shape enables the object to be cut 9 to be placed more easily into the receiving region 23, and when the object to be cut 9 slides along the receiving region 23 towards the clamp jaw 11b, it will abut and grasp the object to be cut 9. The clamp jaw 11b will then open to assist in guiding the object to be cut 9 into a position closer to the cutting saw blade 6.

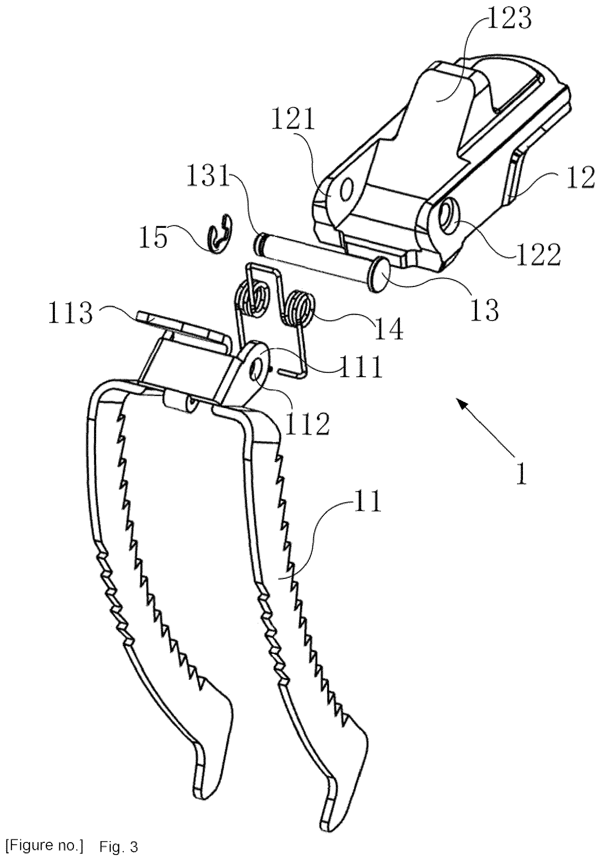

In this embodiment, as shown in fig. 3, an upper end part of the clamp 11 is connected to a front end part of the clamp support 12. Specifically, two sides of the upper end part of the clamp 11 are folded down to form two left and right connecting plates 111 connected to the clamp support 12, the two connecting plates 111 each being provided with a pin hole 112; correspondingly, the front end part of the clamp support 12 is folded up to form a connecting part 121 corresponding to the connecting plates 111. The connecting part 121 has two plate-like connecting members, which are capable of being fitted over outer sides of the connecting plates 111. The connecting part 121 is provided with pin holes 122 corresponding to the pin holes 112 in the connecting plates 111. The clamp 11 and clamp support 12 are connected by means of a connecting pin 13 passing through the pin holes 112, 122. A torsion spring 14 is also fitted round the connecting pin 13; one end of the torsion spring 14 is engaged with the upper end part of the clamp 11 in an upward direction, while another end abuts an outside face of the clamp support 12. Furthermore, an annular groove 131 for an elastic shaft retaining ring 15 to snap into is provided at an end part of the connecting pin 13. The clamp 11, clamp support 12 and torsion spring 14 are connected together by means of the connecting pin 13 and elastic shaft retaining ring 15. The clamp 11 can rotate and return to its initial position under the action of the torsion spring 14. When in the state of having returned to its initial position, the clamping device is in a closed position, with the clamp 11 thereof lying against the front end part 21 of the reciprocating saw. The torsion spring 14 may also be another elastic member, such as a flat spring, etc.; there is no restriction to the torsion spring form, and the same is true for the torsion spring and compression spring, etc. used hereinbelow.

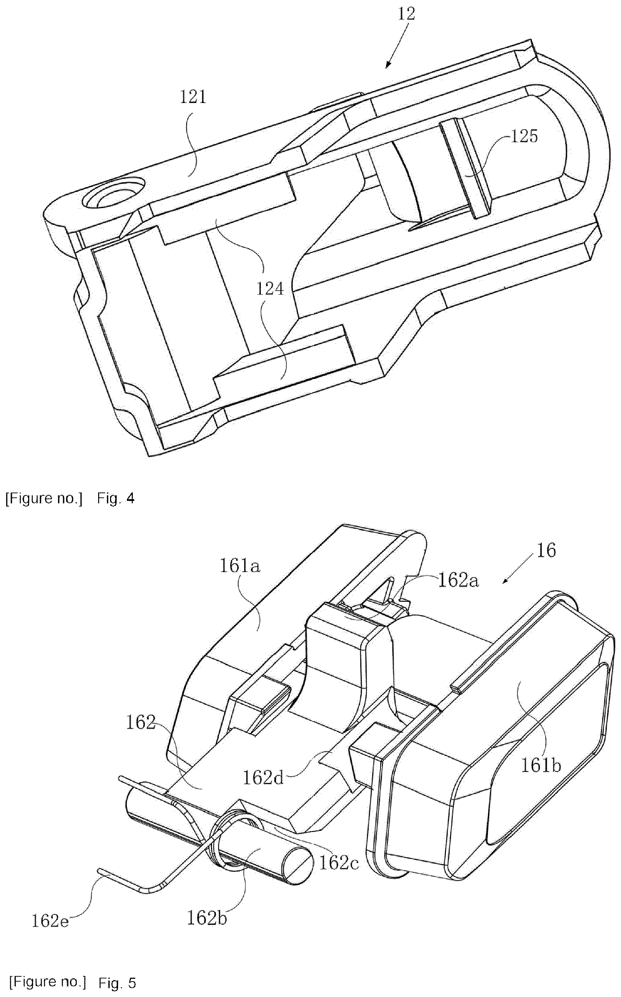

In this embodiment, the clamping device 1 is fixed to the reciprocating saw machine body by means of a snap-fit structure, specifically being positioned and mounted by means of guide structures disposed on the clamp support 12 and housing 2, and a snap-fit assembly 16 described below. The guide structures are configured to guide and mount the clamp support 12, and the snap-fit assembly 16 is configured to fasten and release the clamp support 12; when the clamp support 12 is fastened, the clamping device 1 is fixed to the reciprocating saw housing 2. The guide structures comprise a pair of guide ribs 124 (a first guide structure) disposed on inside walls of the clamp support 12 as shown in fig. 4, the guide ribs 124 being formed opposite each other on inside walls of the connecting part 121 of the clamp support 12; opposite this, in corresponding positions at a front end of the housing 2, a pair of guide grooves 24 (a second guide structure) corresponding to the guide ribs 124 is also provided on side walls of the housing 2, and the clamping device 1 can be mounted quickly by means of the guiding action of the guide ribs 124 and guide grooves 24.

As shown in fig. 2, the snap-fit assembly 16 is mounted inside the housing 2, close to the guide grooves 24; specifically, a button part 161 thereof is arranged to pass through two side walls of the housing 2, a snap-fit part 162 (a second snap-fit structure) subjected to a pressing operation by means of the button part 161 is located inside the housing 2, and a hole for a hook part 162a of the snap-fit part 162 to pass through is also provided in a top wall of the housing 2. Figs. 5 and 6 show the specific structure of the snap-fit assembly 16; as shown in the figures, the button part 161 comprises buttons 161a, 161b, and a compression spring 161c located between 161a and 161b. The compression spring 161c is configured to maintain the relative positions of the two buttons 161a, 161b, and the snap-fit part 162 subjected to a pressing operation by means of the button part 161 is located between the two buttons. Pressing the button part 161 causes the hook part 162a thereof to hook and release a support part 125 (a first snap-fit structure, see fig. 4) of the clamp support 12.

A body of the snap-fit part 162 in this embodiment is plate-like, one end part thereof being folded obliquely upwards to form the hook part 162a. An angle between the hook part 162a and the body of the snap-fit part 162 is greater than 90°, being an obtuse angle; such a structure facilitates the mounting of the clamp support 12. A connecting pin 162b is integrally formed at another end part of the snap-fit part 162; the connecting pin 162b may of course also be formed by another method such as welding. A gap 162c for mounting a torsion spring 162e is left between one end of the connecting pin 162b and the body of the snap-fit part 162; the gap 162c is of such a size as to be able to accommodate the torsion spring 162e fitted round the connecting pin 162b. The snap-fit part 162 in this embodiment is moveably mounted on inner walls of the housing 2 by means of the connecting pin 162b and rotates; specifically, a pair of mounting holes is provided opposite each other in inner walls at two sides of the housing 2, with two end parts of the connecting pin 162b being respectively mounted in the mounting holes, thereby mounting the snap-fit part 162 inside the housing 2. End parts of the torsion spring 162e fitted round the connecting pin 162b abut the inner walls of the housing 2, for the purpose of returning the snap-fit part 162 to its initial position. Oblique faces 162d are formed on two side faces of the snap-fit part 162 that are adjacent to the buttons 161a, 161b; the oblique faces 162d are a part of the side faces. The oblique faces 162d are pressed faces; preferably, the two oblique faces are formed to be inclined from two sides of the hook part 162a.

The buttons 161a, 161b of the button part 161 are arranged to be inserted opposite each other; the button 161a and button 161b have guide parts 161a-1 and 161b-1 respectively, which are formed to extend towards each other from button bodies. The guide parts 161a-1 and 161b-1 are cylindrical structures fitting each other, wherein the internal diameter of the guide part 161b-1 is slightly larger than the external diameter of the guide part 161a-1. The compression spring 161c is located inside the guide parts, and abuts the bodies of the two buttons. A guide rib 161a-2, and an engagement slot 161b-2 fitting the guide rib 161a-2, are also formed in an axial direction on outside walls of the guide parts 161a-1 and 161b-1 respectively. The buttons 161a, 161b also have pressing parts 161a-3, 161b-3 for pressing the snap-fit part 162; the pressing parts 161a-3, 161b-3 have pressing inclined faces for pressing the oblique faces 162d of the snap-fit part 162.

In this embodiment, the process of action of the snap-fit assembly 16 is as follows. When the buttons 161a, 161b of the button part 161 are not subjected to a force application operation, the two buttons remain at a certain distance under the action force of the compression spring 161c; this certain distance is a distance at which rotation of the snap-fit part 162 does not encounter interference. At this time, quite a long part of the hook part 162a extends out of the housing 2; thus, if the clamping device 1 is mounted, the hook part 162a is in a state of hooking the support part 125 of the clamp support 12. When the buttons 161a, 161b are pressed towards each other, the two buttons 161a, 161b approach each other, and the pressing inclined faces of the pressing parts 161a-3, 161b-3 thereof will respectively press the oblique faces 162d of the snap-fit part 162, thus causing the snap-fit part 162 to rotate downwards (i.e. rotate away from the housing 2); the hook part 162a also rotates downwards therewith, thus no longer hooking the support part 125, so the clamp support 12 and the clamp 11 thereon can be released. When the pressing operation on the buttons 161a, 161b is removed, the buttons 161a, 161b return to the certain distance mentioned above under the action of the elastic force of the compression spring 161c. Under the action of the torsion spring 162e, the snap-fit part 162, which is no longer pressed, rotates back to its initial position where quite a long part of the hook part 162a extends out of the housing 2.

A limiting structure for limiting the rotation range of the clamp 11 is also provided on the clamping device 1. Specifically, an inclined face 123 sloping towards a rear end of the clamp support 12 is formed between the two plate-like connecting members of the connecting part 121 of the clamp support 12; opposite this, between the two connecting plates 111 of the clamp 11, the upper end part of the clamp is bent away from the clamp support 12 to form a limiting part 113. Thus, when the clamp 11 rotates to a maximum angle, the limiting part 113 and the inclined face 123 of the clamp support 12 abut each other to achieve limiting.

In this embodiment, a sawtooth-like structure may also be provided on a front side face (i.e. a side face that faces away from the housing 2) of the clamping claw 11a of the clamp 11. Thus, when the clamping device 1 is not being used, the object to be cut 9 can also be abutted by using the sawtooth-like structure at the front side of the clamping claw 11a, to perform a cutting operation.

In this embodiment, the mounting and clamping operations of the clamping device 1, and the process of subsequently removing it, are specifically as follows. The fully assembled clamping device 1 is placed in front of the front end part 21 of the housing 2, and the clamp support 12 is pushed rearwards along the position where the guide grooves 24 on the housing 2 are located. As it is pushed, the support part 125 on an inside face of the clamp support 12 comes into contact with the hook part 162a of the snap-fit part 162. After continued pushing of the clamp support 12, the snap-fit part 162 is caused to rotate downwards under the action of the pushing force of the support part 125, and at the same time the hook part 162a is also caused to move downwards therewith, and the support part 125 thus crosses over the hook part 162a. When the support part 125 has crossed over the hook part 162a, the hook part 162a is no longer subjected to the force, and can return to its initial position under the action of the torsion spring 162e, thus coming into abutment with the support part 125, such that the clamp support 12 is fixed to the housing 2. Mounting and positioning of the clamping device 1 is thus completed.

Next, the object to be cut 9 is clamped by means of the mounted clamping device 1 to perform the cutting operation. When the object to be cut 9 is received in the receiving region 23, a user grips the reciprocating saw handle 8 and pulls the reciprocating saw towards the user's body (i.e. rearwards); the object to be cut 9 will then push the clamp jaw 11b and cause the clamp 11 to move from the closed position shown in fig. 1 to an open position shown in fig. 7. In fig. 7, the open position is a partially open position. In the open position, the clamp jaw 11b is no longer close to the receiving part 22, because the object to be cut 9 is forcing the clamp 11 to open and move in the direction of the arrow in the figure. With further pushing, the object to be cut 9 will move closer to the cutting saw blade 6, and due to the action of the torsion spring 14 on the clamp 11, the object to be cut 9 is biased towards the closed position, and advances towards the cutting saw blade 6, until it reaches a cutting position below the cutting saw blade 6. When the object to be cut 9 is cut by the cutting saw blade 6, the object to be cut 9 can be prevented from shaking, slipping and rotating, etc., because the clamp 11 clamps the object to be cut 9 in a stable fashion. Thus, even in the case where a cylindrical object to be cut 9 such as a branch or pipe is being cut, movement of the object to be cut 9 can be prevented effectively.

When cutting is complete, the clamping device 1 can be removed from the housing 2. Furthermore, the clamping device may also not be removed, because the clamping device 1 lies against the housing 2 when not clamping the object to be cut 9, so takes up little space and does not affect the transportation of the reciprocating saw. When it is necessary to remove the clamping device 1, the buttons 161a, 161b are pressed; the snap-fit part 162 is pushed to rotate downwards by means of the pressing parts 161a-3, 161b-3 on the buttons, and the hook part 162a thereof rotates downwards therewith and no longer abuts the support part 125. At this time, the clamping device 1 can be removed from the housing 2 by pulling the clamp support 12 away from a body of the reciprocating saw.

### <Embodiment 2>

In this embodiment, a clamping device 1' with a simpler structure than the clamping device 1 in embodiment 1 is further provided. The clamping device 1' is mounted on the reciprocating saw body in the same position as in embodiment 1, also lies against a housing 2' in a mounted state, and as in embodiment 1, is removable relative to the reciprocating saw machine body. In this embodiment, the manner of operation of the clamping device 1' and the internal structure of the reciprocating saw are both the same as in embodiment 1, so will not be described again in embodiment 2.

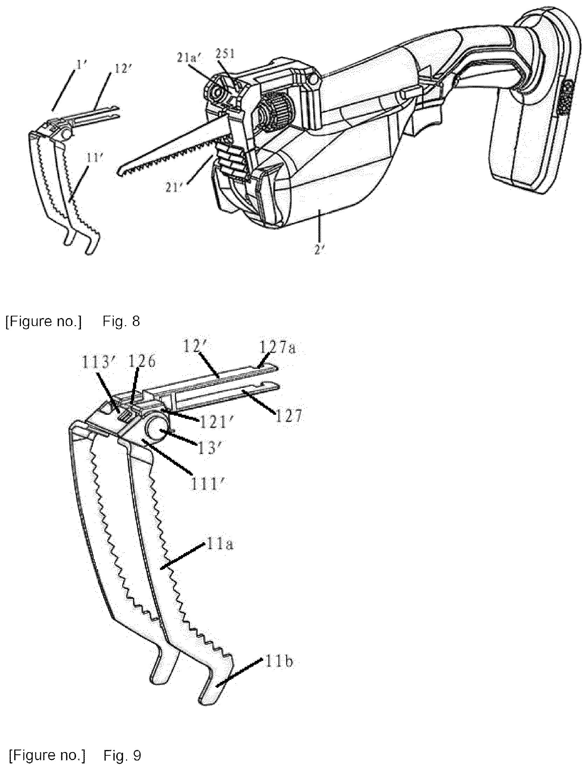

As shown in fig. 8, the clamping device 1' in this embodiment comprises a clamp 11' and a clamp support 12'; the structures of a clamping claw 11a and a clamp jaw 11b of the clamp 11' are the same as those described in embodiment 1, so will not be described in detail again. In this embodiment, the clamp 11' and the clamp support 12' are also hinge-connected by means of a connecting pin 13', and a torsion spring (not shown) is also fitted round the connecting pin 13'.

Fig. 9 is an exploded drawing of the clamping device of this embodiment. As shown in the figure, an upper end part of the clamp 11' is hinge-connected to a front end of the clamp support 12'. Two left and right connecting plates 111' are formed at the upper end part of the clamp 11', the two connecting plates 111' each being provided with a pin hole (not shown). Correspondingly, a connecting part 121' fitting the connecting plates 111' is formed at the front end of the clamp support 12', the connecting part 121' being provided with pin holes (not shown) corresponding to the pin holes in the connecting plates 111'. The clamp 11' and clamp support 12' are connected by means of a connecting pin 13' passing through the pin holes, and a torsion spring fitted round the connecting pin 13' is located inside the connecting part 121'. A middle part of a front end part of the clamp 11' extends out towards the clamp support 12' to form a limiting part 113'; during use, the limiting part 113' performs limiting by abutting a front end of a guide rod 127 described below, and at the same time, correspondingly, a slot part 126 preventing interference with rotation of the limiting part 113' is provided at an upper middle position of the clamp support 12'. One end of the torsion spring fitted round the connecting pin 13' is engaged below the limiting part 113' of the clamp 11', and another end abuts the clamp support 12'. Furthermore, an annular groove (not shown, the same as in embodiment 1) for an elastic shaft retaining ring (not shown, the same as in embodiment 1) to snap into is provided at an end part of the connecting pin 13'. The clamp 11', clamp support 12' and torsion spring are connected together by means of the connecting pin 13' and elastic shaft retaining ring, and the clamp 11' can rotate and return to its initial position under the action of the torsion spring. When in the state of having returned to its initial position, the clamp 11' of the clamping device lies against a front end part 21' of the reciprocating saw housing.

The clamping device 1' in this embodiment is also mounted at a front end of the machine body of the reciprocating saw. Specifically, a recess 21a' for mounting the clamping device 1' is left at a front end of the housing 2'; when mounting is complete, the clamp 11' of the clamping device 1' lies against the front end part 21' of the housing 2', with the connected parts of the clamp 11' and clamp support 12' being inserted into the recess. Such a design enables the clamping device 1' to be mounted more securely on the reciprocating saw. An internal space 25 for accommodating the guide rod 127, described below, of the clamp support 12' is formed in the housing 2' behind the recess 21a'.

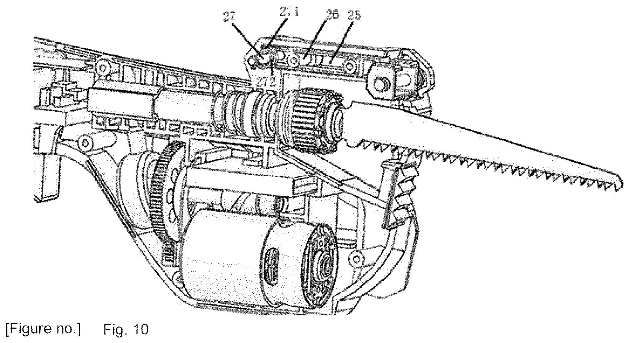

The clamp support 12' in this embodiment is connected to the reciprocating saw machine body by means of a guide rod having an engagement slot structure at an extremity thereof. Specifically, the connecting part 121' extends rearward away from the end of the clamp 11' to form a pair of guide rods 127 (a first guide structure); the two guide rods are arranged opposite each other in a vertical direction, and are each provided with an engagement slot 127a (a first snap-fit structure) close to an extremity thereof. Correspondingly, a snap-fit structure and a guide structure fitting the guide rods 127 are also formed on the housing 2'. As shown in fig. 10, the internal space 25 for mounting the guide rods 127 is formed inside the housing 2'. The internal space 25 is rectangular, having an insertion port 251 at an end close to the recess 21a'; the guide rods 127 enter the internal space 25 through the insertion port 251. A guide post 26 (a second guide structure) is provided in the internal space 25 in such a way as to run through in a direction perpendicular or approximately perpendicular to the guide rod 127. The guide post 26 preferably has a cylindrical structure, and a gap for the guide rod 127 to pass through is left between the guide post 26 and an inner wall of the housing 2'. The diameter of the guide post 26 is slightly smaller than the distance between the two guide rods 127; when mounting is complete, the two guide rods 127 are clamped at upper and lower sides of the guide post 26. The guide post 26 provides a guiding action for mounting of the guide rods 127, such that the clamping device can be mounted more easily; furthermore, the guide rods 127 are supported by the guide post 26, so the mounting stability and force-bearing strength of the clamping device can be enhanced. In this embodiment, two guide posts are shown as being provided in the drawings, but the number of guide posts is not limited to two; one or more guide posts may be provided as required.

The guide rod 127 in this embodiment may be made of a metal material, or made of a plastic material. When a metal material is used, the thickness of the guide rod is 0.6 mm - 2.4 mm, or 0.8 mm - 2.0 mm, or 1 mm - 1.8 mm, or 1.2 mm - 1.5 mm, and is preferably about 1.3 mm. When a plastic material is used, the thickness of the guide rod is at least 1.3 mm, and preferably at least 3 mm, to ensure sufficient strength. Moreover, when the clamping device 1' is operating, both the guide rod 127 and the housing at the position where the guide rod is located will be subjected to forces, so the housing 2' must be thickened at this position (i.e. the position where the internal space 25 is located), in order to improve the force-bearing strength.

As shown in fig. 10, a positioning pin assembly (a second snap-fit structure) is also mounted close to an extremity of the internal space 25; the positioning pin assembly comprises a positioning pin 27 and a compression spring 272 fitted round the positioning pin 27. Two ends of the positioning pin 27 are moveably mounted on side walls of the housing 2'. As shown in fig. 10, the positioning pin 27 comprises a positioning part 271 formed on a pin body of the positioning pin 27, the positioning part 271 having a shape matched to the engagement slot 127a on the guide rod 127, and preferably being cylindrical; the positioning of the clamp support 12' is achieved by means of the snap-fitting of the positioning part 271 and the engagement slot 127a. The compression spring 272 for returning the positioning pin 27 to an initial position is fitted round the pin body of the positioning pin 27. The compression spring 272 is mounted on the pin body of the positioning pin 27 at a side remote from the guide rod 127, and has one end in abutment with an inner wall of the housing 2', and another end in abutment with the positioning part 271. The clamp support 12' can be fixed and positioned by means of the positioning pin 27. The quantity and mounting position of the positioning pin 27 are not limited to those described in the embodiment, but may be adjusted according to circumstances.

In this embodiment, the mounting and removal processes of the clamping device 1' are specifically as follows. The clamping device 1' is placed in front of the front end part 21' of the housing 2', the guide rods 127 are aligned with the insertion port 251, and the clamp support 12' is pushed towards the internal space 25. The two guide rods 127 pass through the gaps between the guide post 26 and the housing 2', vertically clamping the guide post 26 from the upper side and the lower side respectively of the guide post 26, thus entering the internal space 25. When the guide rods 127 continue to be pushed and resistance is encountered (the positioning part 271 on the positioning pin 27 obstructs the guide rods 127), at this time, an end part of the positioning pin 27 at the side remote from the compression spring 272 is pressed, and the positioning pin 27 moves towards the side where the compression spring 272 is located under the action of the force; the positioning part 271 of the positioning pin 27 also moves back therewith to one side, thus moving out of the way, and the compression spring 272 is compressed. When the positioning part 271 has moved back out of the way, the clamp support 12' is pushed slightly, at which time the connected parts of the clamp 11' and the clamp support 12' will also be inserted into the recess 21a'. The positioning pin 27 is then released, and the positioning pin 27 returns to its initial position under the action force of the compression spring 272, such that the positioning part 271 is snap-fitted into the engagement slot 127a of the guide rod 127, thus positioning the guide rod 127. Mounting of the clamping device 1' is thus completed.

When the reciprocating saw has been used, the clamping device 1' may be removed from the reciprocating saw, but may also not be removed, as was the case in embodiment 1. When it must be removed, the positioning pin 27 is pressed such that the positioning part 271 thereof moves back out of the engagement slot 127a; the clamping device 1' can then be removed from the housing 2' by pulling the clamping device.

In this embodiment, the process of the clamping device 1' clamping the object to be cut 9 is the same as in embodiment 1.

The present invention also provides a fastening ring 61 for the reciprocating saw cutting saw blade 6 (as shown in figs. 1 and 2); the cutting saw blade can be replaced quickly by means of the fastening ring 61. In the prior art, multiple protrusions are generally provided in an axial direction at the periphery of the fastening ring 61; these protrusions help to prevent slipping when the fastening ring is being fastened and released, and can increase frictional resistance. However, with such a structure, it is not possible to exert a force effectively in operations like reciprocating saw cutting saw blade replacement, which require a large fastening force, so operational requirements can thus not be satisfied. To solve this problem, in this embodiment, a protrusion structure 611 enabling an operator to exert a force with a thumb is provided in an axial direction at the periphery of the fastening ring 61. Preferably, two protrusion structures 611 are provided, the two protrusion structures 611 being arranged opposite each other in a circumferential direction at the periphery of the fastening ring 61, and tooth-like protrusions for increasing frictional resistance are also provided on the protrusion structures 611 at a side where a force is exerted. The cutting saw blade 6 can be replaced more easily and quickly by means of the fastening ring with such a structure in the present invention, and it is also possible to effectively prevent slipping, etc. when the fastening ring 61 is rotated, thus providing a further safety guarantee for the operator.

## Claims

1. Reciprocating saw, comprising a handle (8), a cutting saw blade (6) remote from the handle (8), and a reciprocating saw machine body located between the handle (8) and the cutting saw blade (6), and a clamping device (1, 1'), the clamping device (1, 1') being mounted on the machine body of the reciprocating saw, close to the cutting saw blade (6) located at a front end of the machine body of the reciprocating saw, and being configured to clamp an object to be cut (9) when the reciprocating saw is performing a cutting operation,
the clamping device (1, 1') comprises a clamp (11, 11') and a clamp support (12, 12'), the clamp (11, 11') and clamp support (12, 12') being rotatably hinge-connected, wherein the clamping device (1, 1') is removably mounted on the machine body of the reciprocating saw by means of positioning structures which fit each other and are arranged on the clamp support (12, 12') and a housing (2, 2') of the reciprocating saw;
wherein the positioning structures comprise a snap-fit assembly (16) to fasten and release the clamp support (12, 12'), **characterized in that** the snap-fit assembly (16) comprises a button part (161) and a snap-fit part (162) subject to a pressing operation by means of the button part (161), the snap-fit part (162) comprises a hook part (162a),
wherein the positioning structures further comprise a support part (125) of the clamp support (12, 12'), pressing the button part (161) causes the hook part (162a) to hook and release the support part (125).

2. Reciprocating saw according to Claim 1, **characterized in that**:
an elastic member (14) is also mounted between the clamp (11, 11') and clamp support (12, 12'), and the clamp (11, 11') can be rotated back to an initial position relative to the clamp support (12, 12') by means of the elastic member (14); in a state of having returned to the initial position, the clamping device (1, 1') lies against a front end part (21, 21') of the machine body of the reciprocating saw.

3. Reciprocating saw according to Claim 1, **characterized in that**:
the positioning structures comprise a first guide structure formed on the clamp support (12, 12'), and a second guide structure fitting the first guide structure and arranged on the housing (2, 2').

4. Reciprocating saw according to Claim 3, **characterized in that**:
the first guide structure is a guide rib (124) formed on an inside wall of the clamp support (12), and the second guide structure is a guide groove (24) provided on a front-end side wall of the housing (2).

5. Reciprocating saw according to Claim 3, **characterized in that**:
the first guide structure is a pair of guide rods (127) on the clamp support (12'), and the second guide structure is one or more guide posts (26) arranged in an internal space (25) at a front end of the housing (2').

6. Reciprocating saw according to Claim 4, **characterized in that**:
the snap-fit part (162) is rotatably mounted on an inner wall of the housing (2), an elastic member (162e) is also mounted therebetween, and the snap-fit part (162) can be rotated back to an initial position relative to the housing (2) by means of the elastic member (162e);
when the button part (161) is pressed, the snap-fit part (162) will release the support part (125), and when the button part (161) is released, the snap-fit part (162) will rotate under the action of the elastic member (162e) to a position where the support part (125) can be hooked.

7. Reciprocating saw according to Claim 6, **characterized in that**:
the button part (161) comprises two buttons (161a, 161b) in an insertion fit with each other, the buttons (161a, 161b) being located at two sides of the snap-fit part (162) respectively, and the buttons (161a, 161b) are pressed towards each other to operate the snap-fit part (162);
an elastic member (161c) is also provided between the buttons (161a, 161b), and the buttons (161a, 161b) can be returned by means of the elastic member (161c) to a position where the snap-fit part (162) encounters no interference;
wherein, when the buttons (161a, 161b) are pressed towards each other, the buttons (161a, 161b) approach each other and press the snap-fit part (162) so that the hook part (162a) releases the support part (125).

8. Reciprocating saw according to Claim 2, **characterized in that**:
the elastic member (14) is a torsion spring (14);
wherein, preferably, the clamp (11) and the clamp support (12) are hinge-connected by means of a connecting pin (13); the torsion spring (14) is fitted round the connecting pin (13), and has one end engaged with the clamp (11) in an upward direction, and another end in abutment with the clamp support (12); an elastic shaft retaining ring (15) is also mounted at an end part of the connecting pin (13).

9. Reciprocating device according to Claim 1, **characterized in that**:
an inclined face (123) sloping towards a rear end of the clamp support (12) is also formed on the clamp support (12), and correspondingly, a limiting part (113) is formed at an upper end part of the clamp (11) in such a way as to be bent away from the clamp support (12); limiting is performed by abutment of the limiting part (113) and the inclined face (123) with each other.

10. Reciprocating saw according to Claim 5, **characterized in that**:
the snap-fit assembly includes a positioning pin assembly, the positioning pin assembly comprises a positioning pin (27) moveably mounted in the internal space (25) and including the button part; a positioning part (271) is provided on a pin body of the positioning pin (27) and being the snap-fit part, and an engagement slot (127a) being the support part that can be fastened by means of the positioning part (271);
an elastic member (272) for returning the positioning pin (27) to an initial position is also fitted round the pin body of the positioning pin (27).

11. Reciprocating saw according to Claim 5, **characterized in that**:
the guide post (26) is arranged on a side wall of the internal space (25), and crosses the internal space (25);
wherein, preferably, the guide post (26) is cylindrical; the pair of guide rods (127) are arranged opposite each other in a vertical direction, and a gap therebetween is slightly larger than the diameter of the guide post (26).

12. Reciprocating saw according to Claim 5, **characterized in that**:
the guide rod (127) may be made of a metal material or a plastic material;
when a plastic material is used, the thickness of the guide rod (127) is at least 3 mm.

13. Reciprocating saw according to Claim 2, **characterized in that**:
the clamp (11, 11') has a clamping claw (11a) and a clamp jaw (11b) that is formed at a lower end part of the clamping claw (11a) in such a way as to be bent away from the housing (2, 2'); when the clamping device (1, 1') lies against the housing (2, 2'), the clamp jaw (11b) is close to a receiving region (23) for the object to be cut (9) that is located at the front end part (21, 21');
wherein, preferably, a sawtooth-like structure is provided on a face of the clamping claw (11a) at a side facing the housing (2, 2').

14. Reciprocating saw according to Claim 2, **characterized in that**:
the reciprocating saw has a fastening ring (61) for fastening the cutting saw blade (6), with a protrusion structure (611) being provided in an axial direction on the periphery of the fastening ring (61);
a tooth-like protrusion is also provided on the protrusion structure (611) at a side where a force is exerted;
wherein, preferably, two said protrusion structures (611) are provided, the two protrusion structures (611) being arranged opposite each other in a circumferential direction at the periphery of the fastening ring (61).

## Patentansprüche

1. Säbelsäge, umfassend einen Griff (8), ein von dem Griff (8) entfernt liegendes Sägeblatt (6) und einen zwischen Griff (8) und Sägeblatt (6) angeordneten Säbelsäge-Maschinenkörper, sowie eine Klemmvorrichtung (1, 1'), wobei die Klemmvorrichtung (1, 1') an dem Maschinenkörper der Säbelsäge nahe dem Sägeblatt (6), das an einem vorderen Ende des Maschinenkörpers der Säbelsäge liegt, angebracht und dazu ausgelegt ist, ein Schneidgut (9) einzuklemmen, wenn die Säbelsäge einen Sägevorgang ausführt,
wobei die Klemmvorrichtung (1, 1') eine Klemme (11, 11') und eine Klemmenhalterung (12, 12') aufweist, wobei die Klemme (11, 11') und die Klemmenhalterung (12, 12') drehbar aneinander angelenkt sind,
wobei die Klemmvorrichtung (1, 1') abnehmbar an dem Maschinenkörper der Säbelsäge mittels Positionierstrukturen gelagert ist, die passgenau ausgebildet und an der Klemmenhalterung (12, 12') und einem Gehäuse (2, 2') der Säbelsäge angeordnet sind,
wobei die Positionierstrukturen eine Schnappverbindunganordnung (16) zum Fixieren und Freigeben der Klemmenhalterung (12, 12') aufweisen,
**dadurch gekennzeichnet, dass** die Schnappverbindungsanordnung (16) ein Knopfteil (161) und ein Schnappverbindungsteil (162) aufweist, das mittels des Knopfteils einem Andrückvorgang ausgesetzt ist, wobei das Schnappverbindungsteil (162) einen Hakenabschnitt (162a) aufweist,
wobei die Positionierstrukturen ferner ein Halteteil (125) der Klemmenhalterung (12, 12') umfassen, wobei durch Andrücken des Knopfteils (161) der Hakenabschnitt (162a) veranlasst wird, das Halteteil (125) zu verhaken und freizugeben.

2. Säbelsäge nach Anspruch 1,
**dadurch gekennzeichnet, dass**
ferner ein elastisches Element (14) zwischen der Klemme (11, 11') und der Klemmenhalterung (12, 12') angeordnet ist und die Klemme (11, 11') mittels des elastischen Elements (14) relativ zur Klemmenhalterung (12, 12') in ihre Ausgangsposition zurückgedreht werden kann; wobei in einem Zustand der Rückkehr in die Ausgangsposition die Klemmvorrichtung (1, 1') an einem vorderen Endteil (21, 21') des Maschinenkörpers der Säbelsäge anliegt.

3. Säbelsäge nach Anspruch 1,
**dadurch gekennzeichnet, dass**
die Positionierstrukturen eine erste Führungsstruktur umfassen, die an der Klemmenhalterung (12, 12') ausgebildet ist, sowie eine zweite Führungsstruktur, die mit der ersten Führungsstruktur zusammenpasst und an dem Gehäuse (2, 2') angeordnet ist.

4. Säbelsäge nach Anspruch 3,
**dadurch gekennzeichnet, dass**
die erste Führungsstruktur eine an einer Innenwand der Klemmenhalterung (12) ausgebildete Führungsrippe (124) und die zweite Führungsstruktur eine an einer vorderen Seitenwand des Gehäuses (2) vorgesehene Führungsnut (24) ist.

5. Säbelsäge nach Anspruch 3,
**dadurch gekennzeichnet, dass**
die erste Führungsstruktur als ein Paar Führungsstangen (127) an der Klemmenhalterung (12') ausgebildet ist und die zweite Führungsstruktur als ein oder mehrere in einem Innenraum (25) an einem vorderen Ende des Gehäuses (2') angeordnete Führungszapfen (26) ausgebildet ist.

6. Säbelsäge nach Anspruch 4,
**dadurch gekennzeichnet, dass**
das Schnappverbindungsteil (162) drehbar an einer Innenwand des Gehäuses (2) gelagert ist, dazwischen ferner ein elastisches Element (162e) angeordnet ist und das Schnappverbindungsteil (162) mittels des elastischen Elements (162e) in seine Ausgangsposition relativ zum Gehäuse (2) zurückgedreht werden kann;
wobei beim Andrücken des Knopfteils (161) das Schnappverbindungsteil (162) das Halteteil (125) freigibt, und beim Loslassen des Knopfteils (161) sich das Schnappverbindungsteil (162) unter Einwirkung des elastischen Elements (162e) in eine Position dreht, in der das Halteteil (125) verhakt werden kann.

7. Säbelsäge nach Anspruch 6,
**dadurch gekennzeichnet, dass**
das Knopfteil (161) zwei ineinanderpassende Knöpfe (161a, 161b) umfasst, wobei die Knöpfe (161a, 161b) an den beiden jeweiligen Seiten des Schnappverbindungsteils (162) angeordnet sind und wobei die Knöpfe (161a, 161b) zusammengedrückt werden, um das Schnappverbindungsteil (162) zu betätigen;
wobei ferner zwischen den Knöpfen (161a, 161b) ein elastisches Element (161c) vorgesehen ist und wobei die Knöpfe (161a, 161b) mittels des elastischen Elements (161) in eine Position zurückgeführt werden können, in der das Schnappverbindungsteil (162) nicht behindert wird;
wobei beim Zusammendrücken der Knöpfe (161a, 161b) sich die Knöpfe (161a, 161b) annähern und das Schnappverbindungsteil (162) so andrücken, dass der Hakenabschnitt (162a) das Halteteil (125) freigibt.

8. Säbelsäge nach Anspruch 2,
**dadurch gekennzeichnet, dass**
das elastische Element (14) eine Torsionsfeder (14) ist;
wobei vorzugsweise die Klemme (11) und die Klemmenhalterung (12) mittels eines Verbindungsbolzens (13) gelenkig verbunden sind; wobei die Torsionsfeder (14) um den Verbindungsbolzen (13) herum angeordnet ist und mit einem Ende in Richtung nach oben auf die Klemme (11) einwirkt und mit dem anderen Ende an der Klemmenhalterung (12) anliegt; wobei ferner ein elastischer Wellensicherungsring (15) an einem Endabschnitt des Verbindungsbolzens (13) angebracht ist.

9. Säbelsäge nach Anspruch 1,
**dadurch gekennzeichnet, dass**
an der Klemmenhalterung (12) ferner eine Schrägfläche (123) ausgebildet ist, die sich zu einem hinteren Ende der Klemmenhalterung (12) hin neigt, und dass dementsprechend an einem oberen Endabschnitt der Klemme (11) ein Begrenzungsteil (113) so ausgebildet ist, dass es von der Klemmenhalterung (12) weggebogen ist; wobei die Begrenzung durch Aneinanderliegen des Begrenzungsteils (113) und der Schrägfläche (123) erfolgt.

10. Säbelsäge nach Anspruch 5,
**dadurch gekennzeichnet, dass**
die Schnappverbindungsanordnung eine Positionierstiftanordnung umfasst, wobei die Positionierstiftanordnung einen im Innenraum (25) beweglich gelagerten Positionierstift (27) mit dem Knopfteil aufweist; wobei ein Positionierabschnitt (271) an einem Stiftkörper des Positionierstifts (27) angeordnet ist und das Schnappverbindungsteil bildet, und wobei als Halteteil ein Eingriffsschlitz (127a) dient, der mittels des Positionierabschnitts (271) fixiert werden kann;
wobei ferner ein elastisches Element (272) zur Rückführung des Positionierstifts (27) in seine Ausgangsposition um den Stiftkörper des Positionierstifts (27) herum angeordnet ist.

11. Säbelsäge nach Anspruch 5,
**dadurch gekennzeichnet, dass**
der Führungszapfen (26) an einer Seitenwand des Innenraums (25) angeordnet ist und sich durch den Innenraum (25) hindurch erstreckt;
wobei vorzugsweise der Führungszapfen (26) zylindrisch ausgebildet ist;
wobei die beiden Führungsstangen (127) in einer vertikalen Richtung einander gegenüberliegend angeordnet sind und der Abstand zwischen ihnen etwas größer als der Durchmesser des Führungszapfens (26) ist.

12. Säbelsäge nach Anspruch 5,
**dadurch gekennzeichnet, dass**
die Führungsstange (127) aus einem Metall- oder Kunststoffmaterial gefertigt sein kann;
wobei bei Verwendung eines Kunststoffmaterials die Dicke der Führungsstange (127) mindestens 3 mm beträgt.

13. Säbelsäge nach Anspruch 2,
**dadurch gekennzeichnet, dass**
die Klemme (11, 11') eine Klemmklaue (11a) und eine Klemmbacke (11b) aufweist, die an einem unteren Endabschnitt der Klemmklaue (11a) so ausgebildet ist, dass sie vom Gehäuse (2, 2') weggebogen ist;
wobei dann, wenn die Klemmvorrichtung (1, 1') an dem Gehäuse (2, 2') anliegt, sich die Klemmbacke (11b) nahe an einem Aufnahmebereich (23) für das Schneidgut (9) liegt, das sich an dem vorderen Endabschnitt (21, 21') befindet;
wobei vorzugsweise an einer dem Gehäuse (2, 2') zugewandten Seite eine sägezahnartige Struktur an einer Fläche der Klemmklaue (11a) vorgesehen ist.

14. Säbelsäge nach Anspruch 2,
**dadurch gekennzeichnet, dass**
die Säbelsäge einen Fixierring (61) zur Fixierung des Sägeblatts (6) aufweist, wobei am Umfang des Fixierrings (61) in axialer Richtung eine Vorsprungsstruktur (611) vorgesehen ist;
wobei ferner an der Vorsprungsstruktur (611) an einer Seite, an der eine Kraft ausgeübt wird, ein zahnartiger Vorsprung vorgesehen ist;
wobei vorzugsweise zwei dieser Vorsprungsstrukturen (611) vorgesehen sind, wobei die beiden Vorsprungsstrukturen (611) an dem Umfang des Fixierrings (61) in Umfangsrichtung einander gegenüberliegend angeordnet sind.

## Revendications

1. Scie alternative comprenant une poignée (8), une lame de scie (6) distante de la poignée (8), et un corps de machine de scie alternative situé entre la poignée (8) et la lame de scie (6), ainsi qu'un dispositif de serrage (1, 1'), le dispositif de serrage (1, 1') étant monté sur le corps de machine de la scie alternative, près de la lame de scie (6) située à une extrémité avant du corps de machine de la scie alternative, et étant conçu pour serrer un objet à couper (9) lorsque la scie alternative effectue une opération de coupe,
dans laquelle
le dispositif de serrage (1, 1') comprend une pince (11, 11') et un support de pince (12, 12'), la pince (11, 11') et le support de pince (12, 12') étant articulés l'un à l'autre de manière rotative,
le dispositif de serrage (1, 1') est monté de manière amovible sur le corps de machine de la scie alternative au moyen de structures de positionnement qui sont adaptées l'une à l'autre et sont disposées sur le support de pince (12, 12') et sur un carter (2, 2') de la scie alternative,
les structures de positionnement comprennent un ensemble d'enclenchement (16) permettant de fixer et de libérer le support de pince (12, 12'),
**caractérisé en ce que** l'ensemble d'enclenchement (16) comprend une partie bouton (161) et une partie d'enclenchement (162) soumise à une pression au moyen de la partie bouton (161), la partie d'enclenchement (162) comprenant une partie crochet (162a),
les structures de positionnement comprennent en outre une partie de support (125) du support de pince (12, 12'), et une pression sur la partie bouton (161) amène la partie crochet (162a) à accrocher et libérer la partie de support (125).

2. Scie alternative selon la revendication 1,
**caractérisée en ce que** :
un élément élastique (14) est en outre monté entre la pince (11, 11') et le support de pince (12, 12'), et la pince (11, 11') peut être ramenée à sa position initiale par rapport au support de pince (12, 12') au moyen de l'élément élastique (14) ;
dans un état de retour en position initiale, le dispositif de serrage (1, 1') s'appuie contre une partie d'extrémité avant (21, 21') du corps de machine de la scie alternative.

3. Scie alternative selon la revendication 1,
**caractérisée en ce que** :
les structures de positionnement comprennent une première structure de guidage formée sur le support de pince (12, 12'), et une seconde structure de guidage adaptée à la première structure de guidage et disposée sur le carter (2, 2').

4. Scie alternative selon la revendication 3,
**caractérisée en ce que** :
la première structure de guidage est une nervure de guidage (124) formée sur une paroi intérieure du support de pince (12), et la seconde structure de guidage est une rainure de guidage (24) ménagée sur une paroi latérale d'extrémité avant du carter (2).

5. Scie alternative selon la revendication 3,
**caractérisée en ce que** :
la première structure de guidage est une paire de tiges de guidage (127) sur le support de pince (12'), et la seconde structure de guidage est un ou plusieurs goujons de guidage (26) disposés dans un espace interne (25) à l'extrémité avant du carter (2').

6. Scie alternative selon la revendication 4,
**caractérisée en ce que** :
la partie d'enclenchement (162) est montée de manière rotative sur une paroi intérieure du carter (2), un élément élastique (162e) est en outre monté entre les deux, et la partie d'enclenchement (162) peut être ramenée à sa position initiale par rapport au carter (2) au moyen de l'élément élastique (162e) ;
lorsque la partie bouton (161) est enfoncée, la partie d'enclenchement (162) libère la partie de support (125), et lorsque la partie bouton (161) est relâchée, la partie d'enclenchement (162) pivote sous l'action de l'élément élastique (162e) jusqu'à une position permettant d'accrocher la partie de support (125).

7. Scie alternative selon la revendication 6,
**caractérisée en ce que** :
la partie bouton (161) comprend deux boutons (161a, 161b) emboîtés l'un dans l'autre, les boutons (161a, 161b) étant situés respectivement de part et d'autre de la partie d'enclenchement (162), et les boutons (161a, 161b) sont pressés l'un contre l'autre afin d'actionner la partie d'enclenchement (162) ;
un élément élastique (161c) est en outre prévu entre les boutons (161a, 161b), et les boutons (161a, 161b) peuvent être ramenés au moyen de l'élément élastique (161c) jusqu'à une position où la partie d'enclenchement (162) n'est pas entravée ;
sachant que, lorsque les boutons (161a, 161b) sont pressés l'un contre l'autre, les boutons (161a, 161b) se rapprochent et appuient sur la partie d'enclenchement (162), de sorte que la partie crochet (162a) libère la partie de support (125).

8. Scie alternative selon la revendication 2,
**caractérisée en ce que** :
l'élément élastique (14) est un ressort de torsion (14) ;
de préférence, la pince (11) et le support de pince (12) sont articulés l'un à l'autre par une broche de liaison (13) ;
le ressort de torsion (14) est monté autour de la broche de liaison (13) et a une extrémité qui agit sur la pince (11) dans une direction vers le haut et une autre extrémité qui est en butée contre le support de pince (12) ;
un circlip élastique d'arbre (15) est en outre monté à la partie d'extrémité de la broche de liaison (13).

9. Dispositif alternatif selon la revendication 1,
**caractérisé en ce que** :
une surface inclinée (123) orientée vers une extrémité arrière du support de pince (12) est en outre formée sur le support de pince (12), et, en conséquence, une partie de limitation (113) est formée à une extrémité supérieure de la pince (11) de manière à être recourbée en éloignement du support de pince (12) ;
la limitation est assurée par l'appui mutuel de la partie de limitation (113) et de la surface inclinée (123).

10. Scie alternative selon la revendication 5,
**caractérisée en ce que** :
l'ensemble d'enclenchement comprend un ensemble de goupille de positionnement, l'ensemble de goupille de positionnement comprenant une goupille de positionnement (27) montée mobile dans l'espace interne (25) et comportant la partie bouton ;
une partie de positionnement (271) est prévue sur le corps de la goupille de positionnement (27) et constitue la partie d'enclenchement, et
une fente d'engagement (127a) sert de partie de support, qui peut être fixée au moyen de la partie de positionnement (271) ;
un élément élastique (272) permettant de ramener la goupille de positionnement (27) à sa position initiale est en outre monté autour du corps de la goupille de positionnement (27).

11. Scie alternative selon la revendication 5,
**caractérisée en ce que** :
le goujon de guidage (26) est disposé sur une paroi latérale de l'espace interne (25) et traverse l'espace interne (25) ;
de préférence, le goujon de guidage (26) est cylindrique ;
la paire de tiges de guidage (127) sont disposées à l'opposé l'une de l'autre dans une direction verticale, et l'écart entre elles est légèrement supérieur au diamètre du goujon de guidage (26).

12. Scie alternative selon la revendication 5,
**caractérisée en ce que** :
la tige de guidage (127) peut être en métal ou en matière plastique ;
lorsqu'une matière plastique est utilisée, l'épaisseur de la tige de guidage (127) est d'au moins 3 mm.

13. Scie alternative selon la revendication 2,
**caractérisée en ce que** :
la pince (11, 11') comporte une griffe de serrage (11a) et une mâchoire de serrage (11b) formée à une extrémité inférieure de la griffe de serrage (11a) de manière à être recourbée en éloignement du carter (2, 2') ;
lorsque le dispositif de serrage (1, 1') s'appuie contre le carter (2, 2'), la mâchoire de serrage (11b) est proche d'une zone de réception (23) destinée à recevoir l'objet à couper (9) qui est situé au niveau de la partie d'extrémité avant (21, 21') ;
de préférence, une structure en dents de scie est prévue sur une face de la griffe de serrage (11a) du côté tourné vers le carter (2, 2').

14. Scie alternative selon la revendication 2,
**caractérisée en ce que** :
la scie alternative comporte un anneau de fixation (61) pour fixer la lame de scie (6), une structure de protubérance (611) étant prévue dans une direction axiale sur le pourtour de l'anneau de fixation (61) ;
en outre, une protubérance en forme de dent est prévue sur la structure de protubérance (611) du côté où une force est exercée ;
de préférence, deux structures de protubérance (611) sont prévues, les deux structures de protubérance (611) étant disposées à l'opposé l'une de l'autre dans une direction circonférentielle sur le pourtour de l'anneau de fixation (61).
